(19) Europäisches Patentamt
European Patent Office
Office européen des brevets

(11) **EP 4 660 427 A1**

(12) **EUROPEAN PATENT APPLICATION**
published in accordance with Art. 153(4) EPC

(43) Date of publication:
**10.12.2025 Bulletin 2025/50**

(21) Application number: **23919930.0**

(22) Date of filing: **07.12.2023**

(51) International Patent Classification (IPC):
**F01N 3/08** (2006.01)   **G06Q 10/083** (2024.01)
**G06Q 50/40** (2024.01)

(52) Cooperative Patent Classification (CPC):
**F01N 3/08; G06Q 10/083; G06Q 50/40**

(86) International application number:
**PCT/JP2023/043827**

(87) International publication number:
**WO 2024/161795 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.01.2023 JP 2023012113**

(71) Applicant: **SUMITOMO ELECTRIC INDUSTRIES,
LTD.**
**Osaka-shi, Osaka 541-0041 (JP)**

(72) Inventor: **BABA Masato**
**Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **CARBON DIOXIDE RECOVERY SYSTEM, VEHICLE-MOUNTED CONTROL DEVICE, RECOVERY CONTROL DEVICE**

(57)    A carbon dioxide recovery system according to the present disclosure includes a mobile body in which an internal combustion engine is mounted, and a recovery station that recovers an exhaust gas discharged from the internal combustion engine and captures carbon dioxide. The mobile body includes a tank that stores the exhaust gas, and a vehicle-mounted controller that controls storage and delivery of the exhaust gas. The recovery station includes a capture device that receives the exhaust gas delivered from the mobile body and captures carbon dioxide from the received exhaust gas, and a recovery controller that controls an operation of the capture device.

FIG.1

**Description**

TECHNICAL FIELD

The present disclosure relates to a carbon dioxide recovery system, a vehicle-mounted controller, and a recovery controller. The present application claims priority to Japanese Patent Application No. 2023-12113 as an application filed with Japan on January 30, 2023, and all of the contents of the application filed with Japan are incorporated herein.

BACKGROUND ART

PTL 1 discloses a vehicle and a recovery stand for storing carbon dioxide recovered by capturing or adsorbing carbon dioxide in the gas, and also discloses a controller therefor.

PTL 2 discloses a controller for recognizing a passenger and associating the passenger with an amount of recovered carbon dioxide to provide an incentive to the passenger in a vehicle that stores carbon dioxide recovered by capturing or adsorbing carbon dioxide in the gas.

PTL 3 discloses a method of bringing carbon dioxide into contact with fine particles or an aggregate of the fine particles of a substance containing a metal or a low-valent metal in the presence of water to convert carbon dioxide into a harmless substance as a carbonate of a high-valent metal and immobilizing the harmless substance.

CITATION LIST

PATENT LITERATURE

PTL 1: Japanese Patent Laying-Open No. 2021-105362
PTL 2: Japanese Patent Laying-Open No. 2021-33736
PTL 3: Japanese Patent Laying-Open No. 2007-75773

SUMMARY OF INVENTION

A carbon dioxide recovery system according to the present disclosure includes a mobile body in which an internal combustion engine is mounted, and a recovery station that recovers an exhaust gas discharged from the internal combustion engine and captures carbon dioxide. The mobile body includes a tank that stores the exhaust gas, and a vehicle-mounted controller that controls storage and delivery of the exhaust gas. The recovery station includes a capture device that receives the exhaust gas delivered from the mobile body and captures carbon dioxide from the received exhaust gas. The recovery station includes a recovery controller that controls an operation of the capture device.

BRIEF DESCRIPTION OF DRAWINGS

Fig. 1 is a conceptual diagram illustrating a basic configuration of a carbon dioxide recovery system of the present disclosure.
Fig. 2 is a block diagram showing an internal configuration example of the carbon dioxide recovery system according to an embodiment.
Fig. 3 is a schematic diagram illustrating an overall configuration of the carbon dioxide recovery system according to the embodiment.
Fig. 4 is a block diagram showing a functional internal configuration example of a vehicle-mounted controller.
Fig. 5 is a block diagram showing a functional internal configuration example of a recovery controller.
Fig. 6 is a block diagram showing a functional internal configuration example of a management server.
Fig. 7 is a flowchart showing an example basic process of the vehicle-mounted controller.
Fig. 8 is a flowchart showing an example basic process of the recovery controller.
Fig. 9 is a flowchart showing an example basic process of the management server.
Fig. 10 shows example recovery data stored in the management server.
Fig. 11 is a schematic perspective view showing an example capture device according to one embodiment of the present disclosure.
Fig. 12 schematically shows a cross-section taken along the line XII-XII in the capture device of Fig. 11.

DETAILED DESCRIPTION

[Problem to be Solved by the Present Disclosure]

In the device configurations described in PTL 1 and PTL 2, a device that, for example, absorbs carbon dioxide needs to be mounted in a vehicle. Such a carbon dioxide absorption device occupies a large space in the vehicle, and also, has reduced fuel consumption due to an increased weight. In addition, energy consumption required for operating the carbon dioxide absorption device increases. Further, an individual vehicle owner needs to own a capture device, and thus has to bear the device cost.

An object of the present disclosure is to recover carbon dioxide discharged from a mobile body, such as a vehicle, without significantly increasing energy consumption of the mobile body and to provide economic benefits to an owner of the mobile body.

[Advantageous Effect of the Present Disclosure]

According to the present disclosure, a carbon dioxide recovery system can be provided that can recover carbon dioxide discharged from a mobile body without significantly increasing energy consumption of the mobile body and provide economic benefits to an owner of the mobile body.

[Description of Embodiments]

Embodiments of the present disclosure will be listed below for description.

(1) A carbon dioxide recovery system according to an embodiment of the present disclosure includes a mobile body in which an internal combustion engine is mounted, and a recovery station that recovers an exhaust gas discharged from the internal combustion engine and captures carbon dioxide. The mobile body includes a tank that stores the exhaust gas, and a vehicle-mounted controller that controls storage and delivery of the exhaust gas. The recovery station includes a capture device that receives the exhaust gas delivered from the mobile body and captures carbon dioxide from the received exhaust gas. The recovery station includes a recovery controller that controls an operation of the capture device.

In the carbon dioxide recovery system described above, the mobile body brings back the exhaust gas discharged from the internal combustion engine while temporarily storing the exhaust gas in the tank, and then, the exhaust gas is recovered in the recovery station. This eliminates the need for mounting a device that, for example, absorbs carbon dioxide in the mobile body. Thus, a carbon dioxide recovery system can be provided that can recover carbon dioxide without significantly increasing energy consumption of a mobile body and provide economic benefits to an owner of the mobile body. Further, there are no longer any constraints on the size of the device that captures carbon dioxide, thus enabling efficient recovery of carbon dioxide by setting up a large-scale recovery station.

(2) In (1) above, the mobile body may include an exhaust valve that delivers the exhaust gas stored in the tank to the recovery station. The recovery station may include a gas reception unit that receives, through a connection pipe, the exhaust gas delivered from the exhaust valve. The recovery controller may receive mobile body information from the vehicle-mounted controller and receive capture information from the capture device.

A mechanism for transporting exhaust gas is provided in each of the mobile body and the recovery station. Information on the mobile body is transmitted from the vehicle-mounted controller to the recovery controller. The recovery controller also receives information on the carbon dioxide capture work performed by the capture device. As the recovery controller receives these pieces of information, information with the mobile body being associated with the amount of recovered carbon dioxide can be used.

(3) In (2) above, the recovery controller may transmit the mobile body information and the capture information in association with each other to a management server. The management server may output an amount of recovered carbon dioxide based on the capture information and accept an input of a carbon dioxide credit corresponding to the amount of recovered carbon dioxide. The management server may be configured to calculate an incentive provided to the owner of the mobile body based on the carbon dioxide credit, the mobile body information, and the capture information.

The management server is a device owned or used by a recovery management business entity that owns or manages the recovery station. The mobile body information is transmitted to the management server in conjunction with recovery of the exhaust gas. Thus, an incentive corresponding to the carbon dioxide credit obtained by the recovery management business entity in accordance with the amount of recovered carbon dioxide can be provided to the owner of the mobile body. The use of the incentive allows the owner of the mobile body to obtain economic benefits.

(4) In (3) above, the management server may be configured to transmit the mobile body information to a service provider device and transmit information on the incentive to an owner terminal.

The service provider is a business entity that provides services that are beneficial to the owner of the mobile body. The management server can also transmit the mobile body information to the service provider device used by the service provider. Based on the received information, the service provider can provide the owner of the mobile body with, for example, a service that utilizes positional information or travel information of the mobile body. In addition, the incentive obtained by the owner of the mobile body is also sent to the owner of the mobile body, and the owner can use the incentive in exchange for the service as an option for utilizing the incentive. Thus, the owner of the mobile body can obtain economic benefits by enjoying the service and utilizing the incentive.

(5) In (2) to (4) above, the mobile body information may include at least one piece of information of individual identification information on the mobile body, owner information of the mobile body, a travel distance of the mobile body, a travel time of the mobile body, a current location of the mobile body, a travel history of the mobile body, a remaining fuel amount of the mobile body, and power storage information of the mobile body.

By providing the above-described mobile body information to a recovery management business entity or a service provider, the owner of the mobile owner can easily obtain economic benefits.

(6) In (2) to (5) above, the capture information may include at least one piece of information of an amount of the exhaust gas processed by the capture device, an operating time of the capture device, and an amount of a capture product recovered from the capture device.

As the capture information as described above is provided to the recovery management business entity or the service provider, the owner of the mobile body can easily obtain economic benefits.

(7) In (1) to (6) above, the capture device may include a carbon dioxide capture material, a solution in which the carbon dioxide capture material is immersed, a supply unit that supplies the exhaust gas to the solution, and a storage tank in which the solution is stored. The carbon dioxide capture material may be a layered double hydroxide, a basic metal oxide, a basic metal hydroxide, iron, or an iron compound.

As an example of the capture device, the applicant of the present application has developed a carbon dioxide capture device related to the technology disclosed in PTL 3 above. This device uses a carbon dioxide capture material, such a layered double hydroxide, a basic metal oxide, a basic metal hydroxide, iron, or an iron compound, to recover carbon dioxide in the gas as a capture product such as an iron carbonate. By placing this device in the recovery station, the exhaust gas from any mobile body connected to the recovery station can be efficiently processed. A carbon dioxide recovery system can be provided that can recover carbon dioxide discharged from a mobile body without significantly increasing energy consumption of the mobile body and also provide economic benefits to an owner of the mobile body.

(8) In (1) to (7) above, a storage pressure of the exhaust gas in the tank may be less than 1.0 MPa.

Herein, the storage pressure refers to an internal pressure of the tank when the exhaust gas is stored in the tank. Gas having an internal pressure falling within the above-described range is not considered as a high-pressure gas under the current law, and thus, the tank is easy to handle.

(9) In (1) to (8) above, a volume of the tank may be 200 liters or less.

The above-described volume allows the tank to be easily mounted even in a small passenger car.

(10) A vehicle-mounted controller according to an embodiment of the present disclosure is used for the carbon dioxide recovery system according to any one of (2) to (6) above. The vehicle-mounted controller may be configured to detect connection of the connection pipe to the exhaust valve, control discharge of the exhaust gas from the tank, and transmit the mobile body information to the recovery controller.

(11) A recovery controller according to an embodiment of the present disclosure is used for the carbon dioxide recovery system according to any one of (2) to (6) above. The recovery controller may be configured to detect connection of the connection pipe to the gas reception unit, control a capture process of the capture device, receive the mobile body information from the vehicle-mounted controller, receive the capture information from the capture device, and output information including all or part of the mobile body information and the capture information to outside.

[Detailed Description of Embodiments]

Embodiments of the present disclosure will be described below with reference to the drawings. The embodiments described below show one specific example of the present disclosure. Numerical values, shapes, materials, components, arrangement and connection examples of the components, procedures, and the like described below are examples of the embodiments. Each figure is a schematic diagram and is not always drawn precisely. The same components in the figures are denoted by the same reference signs. Descriptions of the functions and the like of the same components will be omitted as appropriate.

<Embodiment 1>

(Basic Configuration of Carbon Dioxide Recovery System)

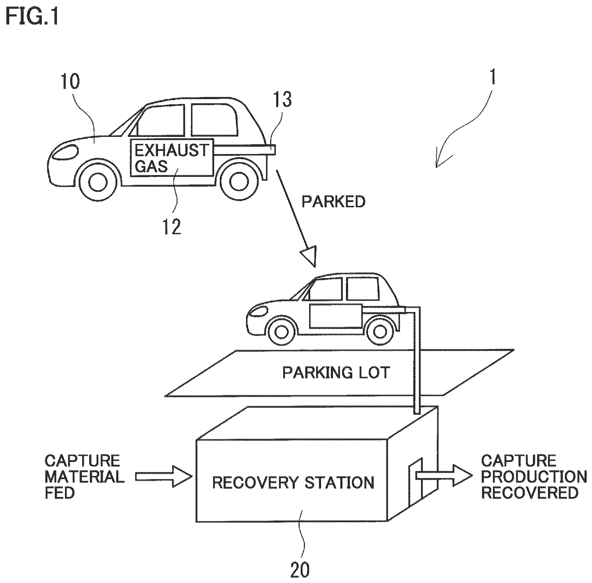

Referring to Fig. 1, a basic configuration of a carbon dioxide recovery system 1, which is an example of the embodiments of the present disclosure, will be described. A mobile body 10 can store an exhaust gas 12 discharged from an internal combustion engine when mobile body 10 is traveling. A recovery station 20 is placed in a parking lot or the like. In this example, mobile body 10 is parked, while storing exhaust gas 12, in a parking lot where recovery station 20 is placed. Mobile body 10 includes an exhaust valve 13 that releases the stored exhaust gas 12 to the outside. After the parked mobile body 10 is connected to recovery station 20, the stored exhaust gas 12 is discharged from exhaust valve 13 to recovery station 20. Recovery station 20 has, for example, a facility that captures carbon dioxide by a method using a carbon dioxide capture material and also recovers a capture product that has been captured. The use of this facility allows recovery of carbon dioxide from exhaust gas 12. However, the facility and the method for recovering carbon dioxide are not limited thereto, and may be any other known facility and any other known method.

As described above, the basic configuration of the present embodiment is that mobile body 10 stores exhaust gas 12, that the stored exhaust gas 12 is delivered to recovery station 20, and that carbon dioxide contained in exhaust gas 12 is recovered in recovery station 20.

Mobile body 10 is typically a four-wheeled vehicle, but the present disclosure is not limited thereto. In addition to four-wheeled vehicles, mobile body 10 also broadly includes mobile bodies that travel by being powered by internal combustion engines and discharge the discharge exhaust gas containing carbon dioxide, such as two-wheeled vehicles, railway vehicles, as well as ships and aircraft. It is not necessary to store the whole amount of exhaust gas. The configuration may be made such that the exhaust gas of the amount allowed for a mounted facility is stored and the exhaust gas that is not stored is discharged to the outside.

(Internal Configuration of Carbon Dioxide Recovery System)

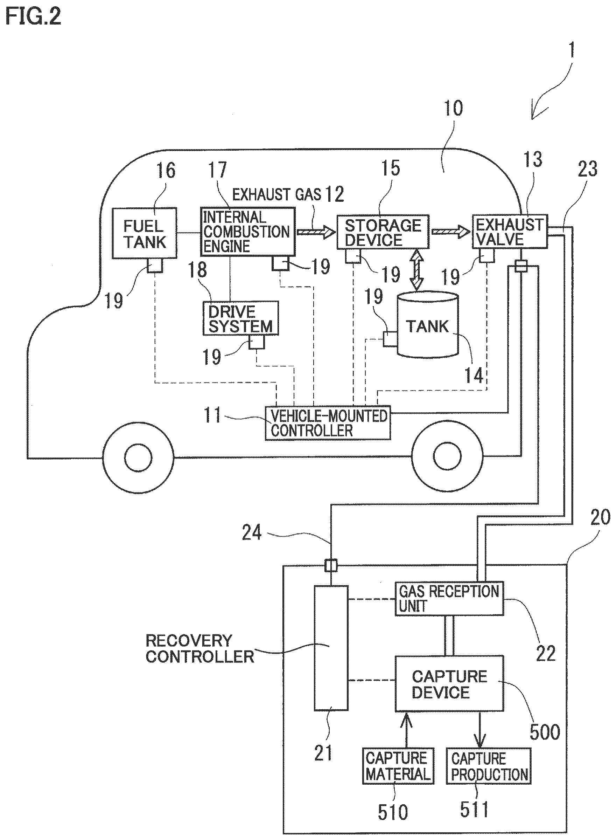

Referring to Fig. 2, an internal configuration example of carbon dioxide recovery system 1 shown in Fig. 1 will be described. Mobile body 10 burns fuel, supplied from a fuel tank 16, by an internal combustion engine 17 and discharges exhaust gas 12. The power generated by internal combustion engine 17 is transferred to a drive system 18, causing mobile body 10 to travel. All or part of exhaust gas 12 is compressed by a storage device 15 and stored in a tank 14. Exhaust gas 12 stored in tank 14 can be discharged to the outside through exhaust valve 13. Although not shown, the exhaust gas that is not stored in storage device 15 is discharged to the atmosphere by a normal method. Mobile body 10 includes a vehicle-mounted controller 11. Vehicle-mounted controller 11 is a device that controls storage and discharge of exhaust gas 12. Vehicle-mounted controller 11 collects information from other vehicle-mounted devices 19. The other vehicle-mounted devices 19 are devices mainly including vehicle-mounted sensors. Each of the plurality of vehicle-mounted devices 19 detects a remaining amount of fuel in fuel tank 16, an operating state of internal combustion engine 17, a travel distance or a travel time of mobile body 10 obtained from drive system 18, an operating state of storage device 15, an internal pressure of tank 14, an open or closed state of exhaust valve 13, or the like. The detected various types of information are transmitted from each vehicle-mounted device 19 to vehicle-mounted controller 11.

Although not shown, when, for example, vehicle-mounted controller 11 detects that the storage state is full due to an increase in the internal pressure of tank 14, the exhaust gas that is not stored in storage device 15 is discharged to the atmosphere by a normal method. When vehicle-mounted controller 11 detects that tank 14 is full, display or the like may be performed to inform the passenger that exhaust gas 12 is to be discharged in recovery station 20. When vehicle-mounted controller 11 is capable of communicating with an external network via wireless communication, it may be configured to inform an external server device or a nearby recovery station 20 that tank 14 is full.

Mobile body 10, which is stopped, is connected to recovery station 20. Exhaust valve 13 of mobile body 10 is connected to a gas reception unit 22 of recovery station 20 by a connection pipe 23. In this connected state, exhaust gas 12 stored in tank 14 is delivered to a capture device 500 through exhaust valve 13, connection pipe 23, and gas reception unit 22. Opening of exhaust valve 13 is not particularly limited, and may be performed mechanically by connection of connection pipe 23. Alternatively, exhaust valve 13 may be opened by, for example, a method of operating an electromagnetic valve by vehicle-mounted controller 11 in response to detection of connection of connection pipe 23. A tank (not shown) that temporarily stores exhaust gas 12 may be provided between gas reception unit 22 and capture device 500. Mobile body 10, which is provided with a tank for temporary storage, can end the connection with recovery station 20 without restrictions on the processing time at capture device 500.

In capture device 500 illustrated in the present embodiment, carbon dioxide is captured using a capture material 510. A capture product 511 that is produced as a result of capturing is recovered as a substance that contains carbon dioxide. Any other known method can be used for capture device 500. Examples of such a method include a method using a solid absorbent material or a liquid absorbent material, a method using membrane separation, and a method using electrolysis. Details of capture device 500 according to the embodiment will be described later.

The place where recovery station 20 is placed is not particularly limited, and can be various places depending on the type, usage pattern, or the like of mobile body 10. When mobile body 10 is a car, examples of the place where mobile body 10 can be parked or stopped as a place where recovery station 20 is placed include a parking lot of an owner of the mobile body, a coin-parking lot, a parking lot of a store or a commercial facility, and a service area on an expressway or the like. The place where mobile body 10 can be parked or stopped may be a station or garage when mobile body 10 is a rail vehicle, may be a port facility when mobile body 10 is a ship, and may be an airport, a parking apron, or the like when mobile body 10 is an aircraft.

Recovery station 20 includes a recovery controller 21. Recovery controller 21 controls an operation of capture device 500 and receives capture information. Recovery controller 21 is connected to vehicle-mounted controller 11 in conjunction with the connection of connection pipe 23. The connection is performed by means of a communication cable 24 provided integrally with connection pipe 23. Recovery controller 21 receives information on mobile body 10 from vehicle-mounted controller 11. The connection between vehicle-mounted controller 11 and recovery controller 21 is not limited to the wired connection using communication cable 24, and may be the wireless communication using a wireless standard such as Bluetooth (registered trademark), or may be performed by means of information transmission via a wireless LAN such as Wi-Fi (registered trademark) based on the IEEE 802.11 standard or via the Internet.

(Storage of Exhaust Gas)

The amount of exhaust gas 12 discharged from internal combustion engine 17 of mobile body 10 varies depending on the type of mobile body 10, and constraints on the size (dimensions or capacity) of tank 14 that can be mounted in mobile body 10 also vary. Carbon dioxide recovery system 1 according to the present embodiment can be used for a mobile body that returns to a parking place that is a fixed place for each travel for a relatively short distance, or a mobile body that travels a route where recovery stations 20 are placed at intervals of a predetermined distance or less. Such a carbon dioxide recovery system 1 used for mobile body 10 is effective from the perspective of efficient recovery of carbon dioxide.

As an example, the storage of exhaust gas in a passenger car intended for short-distance travel will be described. With the aging of the population and the spread of self-driving vehicles, the use of passenger cars that travel 8 km or less at a time is expected mainly in urban areas of Japan. For example, considered here is a situation where a vehicle in which a 1,250 cc gasoline engine is mounted travels 8 km in 15 minutes. There are experimental reports that the amount of exhaust gas discharged from the gasoline engine in those 15 minutes is around 1,400 liters. This is equivalent to around 1.8 kg in weight, which affects the vehicle's weight only slightly even when the exhaust gas is stored in tank 14. A common compressor (not shown) can be included in storage device 15. Compression of 1,400 liters of exhaust gas at a pressure of 0.9 MPa results in a volume of about 130 liters. In Japan, 0.9 MPa is a pressure that currently does not fall under the regulations on high-pressure gases of 1.0 MPa or more. When the volume is converted to the size of a tank, it would be, for example, a cube measuring 50 cm per side or a rectangular parallelepiped of 130 cm by 100 cm by 10 cm, which is a size that can be mounted in a common passenger car. It is considered practical if the volume of tank 14 that can be mounted is 200 liters or less. The volume of tank 14 may be 150 liters or less, 130 liters or less, or 100 liters or less.

Further, storage device 15 can include a carbon dioxide separation device (not shown). The carbon dioxide separation device can be used to store a larger amount of carbon dioxide than when exhaust gas 12 is compressed as it is and stored in tank 14. Herein, the carbon dioxide separation device is, for example, a carbon dioxide separation membrane, which is only required to be a device that can separate carbon dioxide from the exhaust gas without consuming energy. The purpose of using the carbon dioxide separation device is to reduce the volume of gas stored in tank 14. This allows the use of a simple carbon dioxide separation device. For example, when the carbon dioxide concentration doubles, the volume of tank 14 can be halved. A remaining gas after the separation is released to the atmosphere. Even if it is not aimed to increase the purity of carbon dioxide, as a result of the separation, the gas with an increased carbon dioxide concentration is stored in tank 14. As a modification, tank 14 may include a carbon dioxide separation membrane, for example, the wall of tank 14 is a carbon dioxide separation membrane. As tank 14 itself functions as the carbon dioxide separation device, the carbon dioxide concentration of the gas remaining in tank 14 can be increased.

<Embodiment 2>

(Overall Configuration of Carbon Dioxide Recovery System)

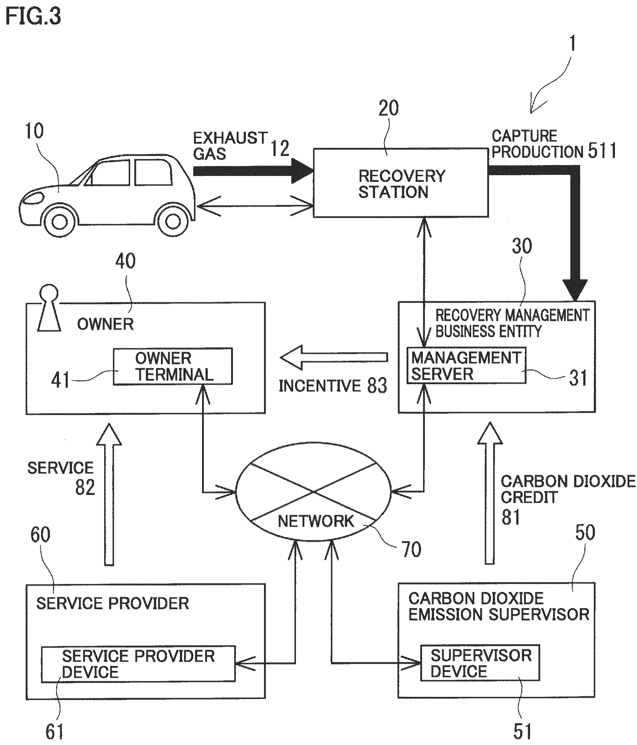

Fig. 3 is a schematic diagram illustrating an overall configuration of carbon dioxide recovery system 1, which further cooperates with external devices, as another embodiment. In Fig. 3, the internal configurations and operations of mobile body 10 and recovery station 20 are the same as those of Embodiment 1 described above. In carbon dioxide recovery system 1 shown in Fig. 3, recovery station 20 is connected to a management server 31 of a recovery management business entity 30. Further, recovery management business entity 30, an owner 40 of mobile body 10, a carbon dioxide emission supervisor 50, and a service provider 60 are connected to one another via a network 70, which is the Internet, so as to exchange information. The connection between recovery station 20 and recovery management business entity 30 is depicted as a dedicated line in Fig. 3, but the present disclosure is not limited thereto. The connection may be via network 70.

(Recovery Management Business Entity)

Recovery management business entity 30 manages information of one or more recovery stations 20 and handles collected capture products 511. Recovery management business entity 30 can obtain financial benefits by trading some or all of capture products 511 as various materials. Recovery management business entity 30 operates management server 31 for information management. "Operating" means using a certain device as management server 31. It does not matter whether management business entity 30 owns the device or not. Management server 31 is a device including a computing unit, a storage unit, and an input/output interface, and is typically a general-purpose computer such as a personal computer, a workstation, or a server. Management server 31 is configured so as to perform communication via network 70.

Management server 31 receives capture information and mobile body information from recovery controller 21 of recovery station 20 (see Fig. 2). Fig. 3 illustrates an operation by drawing one recovery station 20, but a plurality of recovery stations 20 may be connected to management server 31.

The capture information may include at least one piece of information of an amount of exhaust gas 12 processed by capture device 500, an operating time of capture device 500, and an amount of capture product 511 recovered by capture device 500. When recovery controller 21 computes an amount of carbon dioxide recovered by operating capture device 500, the amount of recovered carbon dioxide may be included in the capture information. The capture information may further include any other information such as identification information or operational information of recovery station 20. The identification information is information such as a unique identification number, name, place, or owner.

The mobile body information is only required to include at least one piece of information of individual identification information and owner information of a mobile body, a travel distance, a travel time, a current location, a travel history, a remaining fuel amount, and power storage information of the mobile body. The individual identification information is the number or symbol provided uniquely to a vehicle, or the manufacturer or type of the vehicle. The owner information is the name or address of an owner of the vehicle in question, the number of an official certificate such as a driver's license.

Management server 31 calculates at least an amount of recovered carbon dioxide from the capture information and the mobile body information, and stores these pieces of information in association with each other.

(Owner)

Owner 40 is an individual, a corporation, or the like that owns mobile body 10. "Own(s)" is not limited to a legal relationship, and may be a concept that includes a person who substantially receives benefits related to mobile body 10. Owner 40 owns or uses an owner terminal 41.

Owner terminal 41 is a device that accepts information on the recovery status or an incentive 83. Owner terminal 41 may be a mobile device such as a smartphone or a tablet terminal used by owner 40, a personal computer, or a vehicle-mounted information terminal. Owner terminal 41 is configured so as to perform communication via network 70. Incentive 83 herein is not particularly limited as long as the owner can directly or indirectly enjoy economic benefits. Incentives 83 are typically points known in various point programs, mileage of mileage programs, electronic money, virtual currency, cash, discount coupons, or the like.

(Carbon Dioxide Emission Supervisor)

Carbon dioxide emission supervisor 50 is, for example, a national or local government, a public institution, or a business entity entrusted by such a government or institution. Carbon dioxide emission supervisor 50 receives declarations of the amount of reduced carbon dioxide or the amount of reduced emission for certification. "Certification" refers to certifying contributions of reductions or the like, or granting compensation in accordance with reductions or the like.

In the present disclosure, those that have economic value and can be traded among tangible and intangible objects that are granted as certification are collectively referred to as a carbon dioxide credit 81. As an example, the J-Credit system is in operation at the time of filing of the present application (reference URL: https://japancredit.go.jp/). This system is described as follows: "Under the J-Credit Scheme, the government certifies the amount of greenhouse gas emissions (such as $CO_2$) reduced or removed by sinks through efforts to introduce energy-saving devices and manage forests, as 'credit.' This scheme, which was created by expansively integrating the Domestic Credit Scheme and the Offset Credit (J-VER; Japan's verified emissions reduction) Scheme, is administered by the central government. Credits created under the scheme can be used for various purposes, such as achieving the targets of the Nippon Keidanren's Commitment to a Low Carbon Society, and carbon offset." The owner of the relevant credit can obtain economic benefits by various methods, such as selling the credit.

Carbon dioxide emission supervisor 50 receives a declaration of the amount of recovered carbon dioxide output from management server 31 of recovery management business entity 30. Fig. 3 shows a manner in which management server 31 transmits, via network 70, an amount of recovered carbon dioxide to a supervisor device 51 owned or used by carbon dioxide emission supervisor 50. Supervisor device 51 is a device including a computing unit, a storage unit, and an input/output interface, and is typically a general-purpose computer such as a personal computer, a workstation, or a server. Supervisor device 51 is configured so as to perform communication via network 70.

Carbon dioxide emission supervisor 50 issues carbon dioxide credit 81 in accordance with the received amount of recovered carbon dioxide. Carbon dioxide credit 81 may be calculated by supervisor device 51. Carbon dioxide credit 81 is transmitted from supervisor device 51 to management server 31 of recovery management business entity 30 via network 70. Each communication is not limited to communication via network 70. For example, the communication may be replaced by any other method of transmitting information, for example, transmitting an output result from management server 31 to carbon dioxide emission supervisor 50 by a physical medium such as postal mail, and then inputting the output result to supervisor device 51.

(Service Provider)

Service provider 60 is a business entity that broadly includes business entities that provide some kind of service 82 to owner 40. The content of service 82 is the service that uses the mobile body information described above, and specific content thereof is not limited. Fig. 3 shows a manner in which management server 31 transmits, via network 70, the mobile body information to a service provider device 61 owned or used by service provider 60.

Service provider device 61 is a device including a computing unit, a storage unit, and an input/output interface, and is typically a general-purpose computer such as a personal computer, a workstation, or a server. Service provider device 61 is configured so as to perform communication via network 70. Service provider 60 provides owner 40 with service 82 that has been pre-contracted based on the received information. The communication described above is not limited to communication via network 70, and may be replaced with any other method of transmitting information.

As an example of the service, a stolen vehicle search service for mobile body 10 will be described. Mobile body 10 needs to stop at recovery station 20 at relatively short time intervals in order to recover carbon dioxide. At recovery station 20, mobile body information is transmitted from mobile body 10. As a result, the current location or travel history of mobile body 10 is transmitted to the outside via recovery controller 21 of recovery station 20. When service provider 60 is authorized to receive information on travel of mobile body 10 under a contract with owner 40, management server 31 transmits the mobile body information to service provider device 61.

A case where mobile body 10 has been stolen is assumed here. Owner 40 requests service provider 60 for a service to search for the stolen mobile body 10. Service provider device 61 performs the process of predicting the current location of mobile body 10 from the position or travel history of mobile body 10 received in real time from management server 31. Service provider device 61 transmits information on the current location of mobile body 10 to owner terminal 41. Owner 40 can use the received current location of mobile body 10 to address the theft. Herein, owner 40 may provide service provider 60 with an amount of money obtained by converting incentive 83 to a monetary value in exchange for the service. As an additional service, the following is possible when mobile body 10, which is a stolen vehicle, is connected to recovery station 20. The additional service may include, for example, locking the connection of connection pipe 23 in recovery station 20 in response to an instruction from service provider device 61 to restrict travel of mobile body 10, issuing an alarm in recovery station 20, and automatically forwarding theft information to any other organization such as the police.

<Internal Configuration of Each Device>

(Vehicle-Mounted Controller)

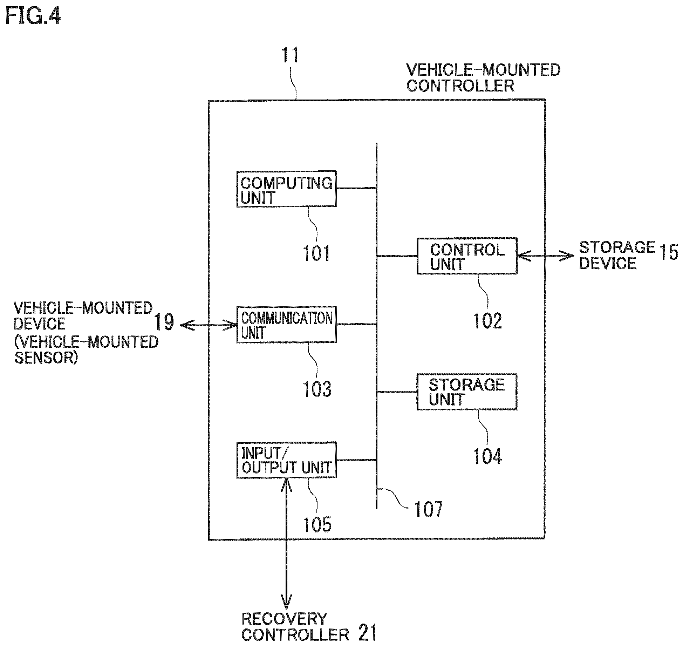

Fig. 4 is a block diagram showing a functional internal configuration example of vehicle-mounted controller 11. Vehicle-mounted controller 11 can be configured of, for example, a computer including a central processing unit (CPU), a random access memory (RAM), a read only memory (ROM), a communication interface, an input/output interface, or the like. Vehicle-mounted controller 11 includes a computing unit 101, a control unit 102, a communication unit 103, a storage unit 104, and an input/output unit 105, which are connected to one another via a bus 107. Storage unit 104 is configured of a volatile or non-volatile memory element. A program or data is stored in storage unit 104. For example, a program stored in the ROM is loaded into the RAM and executed on the CPU to implement the function of computing unit 101 or the like.

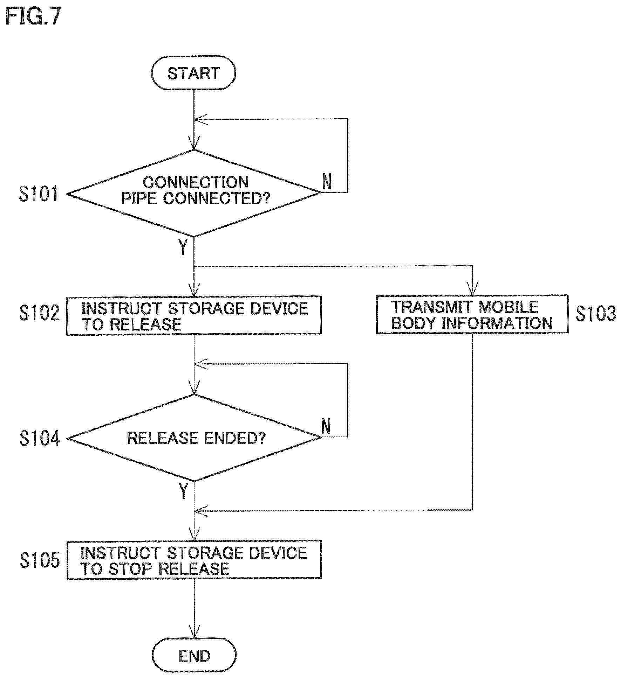

Computing unit 101 processes commands for releasing exhaust gas 12 from tank 14 and for communicating information, based on various types of information from vehicle-mounted device 19 shown in Fig. 2. Fig. 7 is a flowchart showing an example basic process of vehicle-mounted controller 11 controlled by computing unit 101. A flow of the process shown in Fig. 7 will be described with reference to Figs. 4 and 2.

Computing unit 101 first detects the connection of connection pipe 23 from vehicle-mounted device 19 provided in exhaust valve 13 (step S101). The connection may be detected using a switch provided in connection pipe 23. The connection may be detected by communication unit 103 detecting the connection upon connection of communication cable 24.

When the connection is detected, storage device 15 is instructed to release exhaust gas 12 stored in tank 14 via control unit 102 (step S102). In parallel with step S102, the mobile body information is transmitted to recovery controller 21 (step S103). The mobile body information is transmitted via communication cable 24.

When the end of release of exhaust gas is detected from vehicle-mounted device 19 provided in storage device 15 (step S104), storage device 15 is instructed to stop releasing exhaust gas 12 (step S105). Part of the mobile body information is stored in storage unit 104 in advance. In addition, various types of information obtained from vehicle-mounted device 19 are written in storage unit 104 by computing unit 101 as needed. Communication unit 103 is configured to communicate with each vehicle-mounted device 19 via a vehicle-mounted LAN.

(Recovery Controller)

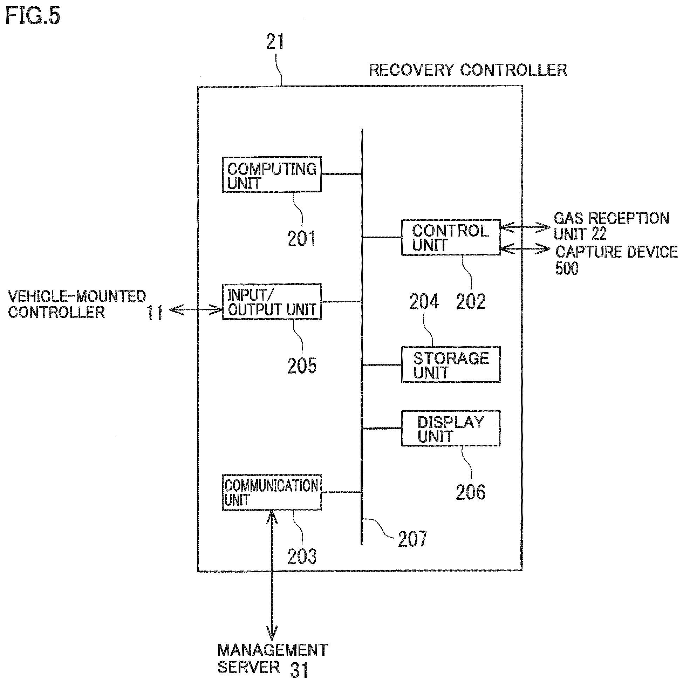

Fig. 5 is a block diagram showing a functional internal configuration example of recovery controller 21 provided in recovery station 20. Recovery controller 21 can be configured of, for example, a computer including a central processing unit (CPU), a random access memory (RAM), a read only memory (ROM), a hard disc drive (HDD), a communication interface, an input/output interface, a display device, or the like. Recovery controller 21 includes a computing unit 201, a control unit 202, a communication unit 203, a storage unit 204, an input/output unit 205, and a display unit 206, which are connected to one another via a bus 207. Storage unit 204 is configured of a volatile or non-volatile memory element, a magnetic storage device such as HDD, or the like. A program or data is stored in storage unit 204. For example, a program stored in the HDD is loaded into the RAM and executed on the CPU to implement the function of computing unit 201 or the like. Communication unit 203 is configured to transmit and receive an Ethernet (registered trademark) frame, which is data generated by computing unit 201 or the like, to and from the outside via an Ethernet network.

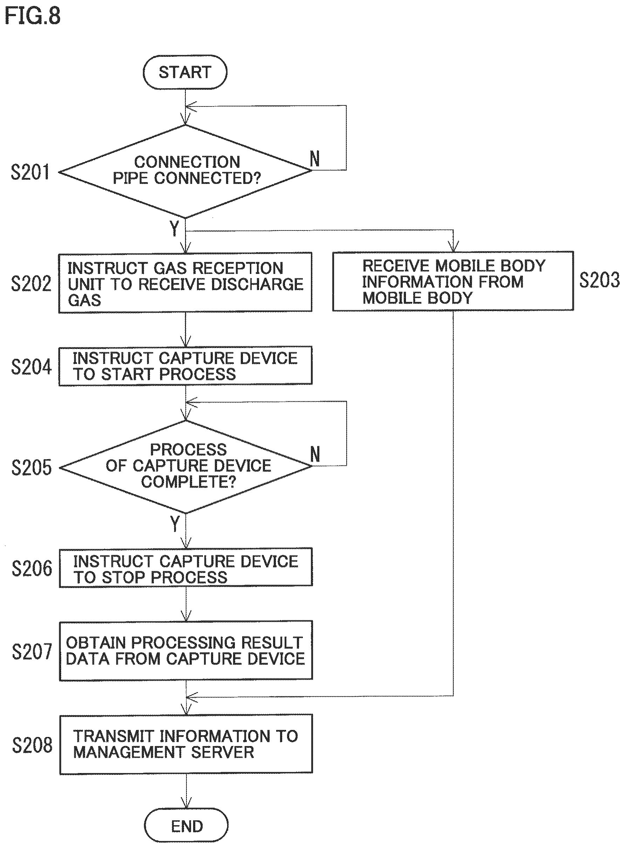

Computing unit 201 instructs transmission of the operation and information of a gas reception unit 22 and capture device 500, starting from the connection with mobile body 10 shown in Fig. 2. Fig. 8 is a flowchart showing an example basic process of recovery controller 21 controlled by computing unit 201. A flow of the process shown in Fig. 8 will be described with reference to Figs. 5, 3, and 2.

Computing unit 201 first detects the connection of connection pipe 23 from gas reception unit 22 (step S201). The connection may be detected by communication unit 203 detecting the connection upon connection of communication cable 24.

When the connection is detected, storage device 15 is instructed via control unit 202 to receive exhaust gas 12 (step S202). Subsequently, capture device 500 is instructed to start the process (step S204).

In parallel with step S202, the process of receiving mobile body information from vehicle-mounted controller 11 is performed (step S203). The transmission of mobile body information is performed via communication cable 24 by input/output unit 205. The received information is stored in storage unit 204.

When it is detected that the process of capture device 500 is complete (step S205), capture device 500 is instructed to stop the process (step S206). Capture device 500 transmits capture information, such as the amount of processed exhaust gas 12 or the amount of capture product 511, to recovery controller 21 as processing result data. Recovery controller 21 obtains the processing result data from capture device 500 (step S207).

Subsequently, recovery controller 21 transmits information to management server 31 by communication unit 203 (step S208). The information transmitted is all or part of the capture information and the mobile body information. Part of the capture information, such as information unique to recovery station 20, may be stored in storage unit 204 in advance. When recovery controller 21 is connected to an output device such as a display or a printer, the necessary information may be output by display unit 206.

The above is the description on a typical time-series process, but a flow of the process by recovery station 20 is not limited thereto. For example, when a tank (not shown) is provided that temporarily stores exhaust gas 12, it is not necessary to start the process of capture device 500 (step S204) immediately after receiving exhaust gas 12. In this case, recovery controller 21 stores the amount of the received exhaust gas 12 in storage unit 204 in association with the mobile body information. The amount of exhaust gas 12 that is later captured and a processing result may be associated with each other and may be regarded as the processing result of exhaust gas 12 from mobile body 10. In addition, the transmission of information to management server 31 is not limited to being performed each time the capture process is performed. For example, a configuration may be made such that a plurality of processing results and mobile body information may be associated with each other at a frequency such as once a day, and then, transmitted together to management server 31.

(Management Server)

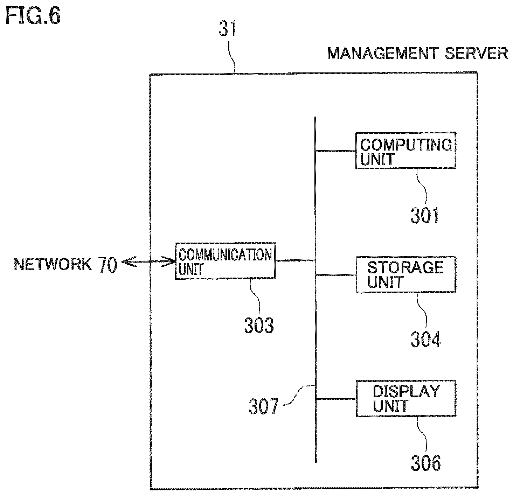

Fig. 6 is a block diagram showing a functional internal configuration example of management server 31 used by recovery management business entity 30. Management server 31 can be configured of, for example, a computer including a central processing unit (CPU), a random access memory (RAM), a read only memory (ROM), a hard disc drive (HDD), a communication interface, an input/output interface, a display device, or the like. Management server 31 includes a computing unit 301, a communication unit 303, a storage unit 304, and a display unit 306, which are connected to one another via a bus 307. Storage unit 304 is configured of a volatile or non-volatile memory element, a magnetic storage device such as HDD, or the like. A program or data is stored in storage unit 304. For example, a program stored in the HDD is loaded into the RAM and executed on the CPU to implement the function of computing unit 301 or the like. Communication unit 303 is configured to, for example, transmit and receive an Ethernet frame, which is data generated by computing unit 301 or the like, to and from the outside via an Ethernet network.

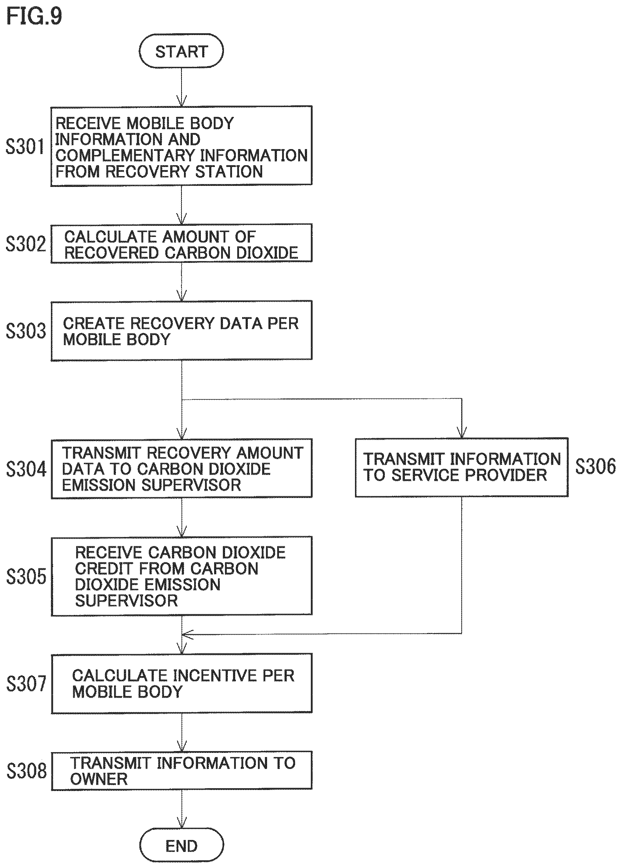

Computing unit 301 calculates an amount of recovered carbon dioxide and processes it in association with the mobile body information. Fig. 9 is a flowchart showing an example basic process performed by management server 31 controlled by computing unit 301. A flow of the process shown in Fig. 9 will be described with reference to Figs. 6 and 3.

Computing unit 301 receives mobile body information and capture information from recovery station 20 received by communication unit 303 (step S301) and stores these pieces of information in storage unit 304. Computing unit 301 calculates an amount of recovered carbon dioxide from the value of the recovery, such as the amount of processed exhaust gas 12 included in the capture information, using a predetermined expression or a conversion table stored in advance, and stores the calculated amount of recovered carbon dioxide in storage unit 304 (step S302). In the configuration in which the amount of recovered carbon dioxide is calculated in recovery station 20, it is only required to store the relevant value.

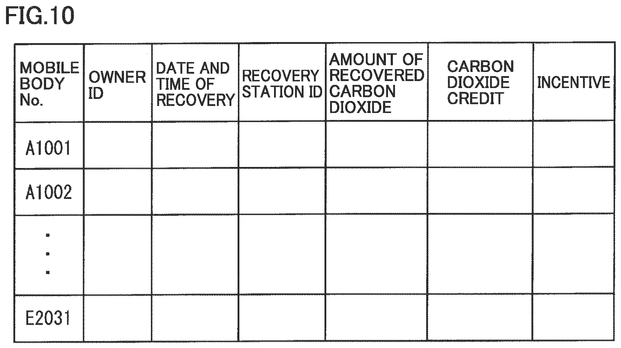

The calculated amount of recovered carbon dioxide is organized in association with mobile body information or any other capture information, and is stored in storage unit 304 (step S303). The recovery data stored may be, for example, data such as a table as shown in Fig. 10, but the present disclosure is not limited thereto. Fig. 10 shows example collected data in which a mobile body No. and an owner ID, which are the identification information of mobile body 10, a date and time of the recovery work, an ID of recovery station 20, and an amount of recovered carbon dioxide are organized in a table format. The recovery station ID is an identification symbol unique to recovery station 20. By referring to the recovery station ID, various types of information including the location of recovery station 20 can be specified. The various types of information related to the recovery station ID may be stored in storage unit 304 in advance or may be stored on, for example, the cloud.

Subsequently, the collected data organized as shown in Fig. 10 is transmitted to supervisor device 51 of carbon dioxide emission supervisor 50 by communication unit 303 (step S304). Carbon dioxide credit 81 corresponding to the collected data is calculated and sent from supervisor device 51. Management server 31 receives carbon dioxide credit 81 (step S305). The value of the received carbon dioxide credit 81 is added to the collected data shown in Fig. 10 and stored in storage unit 304 in association with the relevant collection result.

Computing unit 301 calculates incentive 83 to be provided in response to each collection result, based on the recovery result and based on a predetermined calculation formula or procedure (step S307). The calculation formula or procedure is not particularly limited and may be determined by the type of incentive 83 or recovery management business entity 30 appropriately. The value of the calculated incentive 83 is, for example, added to the recovery data shown in Fig. 10 and stored in storage unit 304 in association with the relevant collection result. In addition, the process result including incentive 83 is transmitted to owner terminal 41 via network 70 by communication unit 303 (step S308).

When owner 40 has registered the relationship with service provider 60 with recovery management business entity 30, the information necessary for service provider 60 may be transmitted to service provider device 61 in parallel with the transmission of the collection data in step S304 (step S306). When management server 31 connects an output device such as a display or a printer, the necessary information may be displayed and output by display unit 306.

A flow of the process by management server 31 has been described as a typical time-series process, but the process of management server 31 is not limited thereto. The order or content of the process may be changed as appropriate due to time constraints, communication path constraints, contractual constraints, or other constraints with owner 40, carbon dioxide emission supervisor 50, and service provider 60.

Each process (each function) in the above-described embodiment is implemented by processing circuitry including one or more processors. The above-described processing circuitry may be configured of, for example, an integrated circuit in which one or more memories, various analog circuits, and various digital circuits are combined in addition to the above-described one or more processors. The one or more memories store the program (instruction) that causes the one or more processors to perform each process described above. The one or more processors may perform each process described above in accordance with the above-described program read from the one or more memories, or may perform each process described above in accordance with a logic circuit designed to perform each processes described above in advance. The above-described processors may be various processors that are suitable for controlling computers, such as central processing units (CPUs), graphics processing units (GPUs), digital signal processors (DSPs), field programmable gate arrays (FPGAs), and application specific integrated circuits (ASICs). The plurality of processors described above, which are physically separated from each other, may perform each process described above in cooperation with each other. For example, the above-described processors installed in the respective physically-separated computers may perform each process described above in cooperation with each other via a network such as a local area network (LAN), a wide area network (WAN), or the Internet. The program described above may be installed in the memory via the network from an external server device or the like, or may be distributed while being stored on a recording medium such as compact disc read only memory (CD-ROM), digital versatile disk read only memory (DVD-ROM), or semiconductor memory, and then installed in the memory from the recording medium.

[Carbon Dioxide Capture Device]

<Capture Device>

A device that uses a carbon dioxide capture material in a solution to immobilize carbon dioxide as a capture product and recover it will be described as an example of capture device 500. Capture device 500 that is applicable to carbon dioxide recovery system 1 of the present disclosure is not limited to the device described below, and may be various devices that can separate and recover carbon dioxide in a gas. Capture device 500, which will be specially descried below, is a device that can be suitably applied to carbon dioxide recovery system 1 of the present disclosure due to the feature of recovering carbon dioxide with a simple configuration and immobilizing and recovering carbon dioxide in the gas as a capture product.

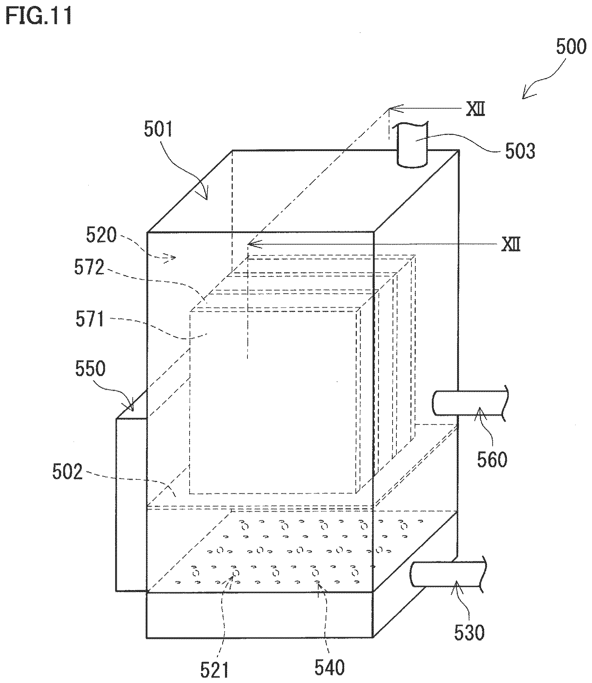

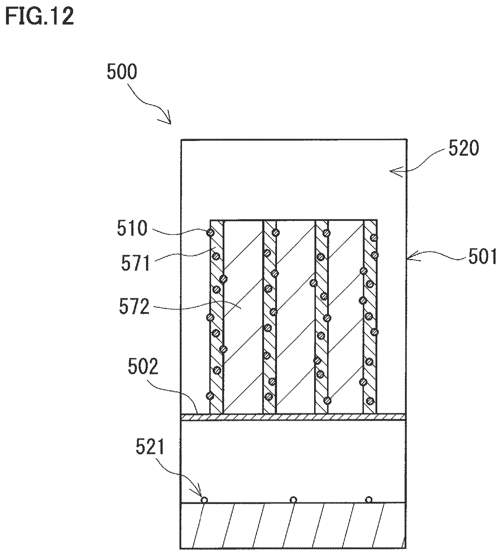

A configuration of capture device 500 will be described with reference to Figs. 11 and 12. Fig. 11 is a schematic perspective view illustrating capture device 500 according to an embodiment of the present disclosure. Fig. 12 schematically shows a cross-section taken along the line XII-XII shown in Fig. 11. Exhaust gas 12 from mobile body 10 is supplied to capture device 500. The carbon dioxide in exhaust gas 12 is captured by the action of capture material 510 in a solution 520.

The size of capture device 500 is set appropriately according to the place and purpose of use of recovery station 20. Capture device 500 will be described below in detail.

Capture device 500 includes a storage tank 501, capture materials 510, solution 520 that covers capture material 510, and a supply unit 530 that supplies exhaust gas 12 containing carbon dioxide to solution 520. Carbon dioxide changes into carbonate ions in solution 520. Capture device 500 may also include a dissolution promotion mechanism 540 that promotes the dissolution of carbon dioxide in solution 520, a dispersion mechanism 550 that disperses the plurality of capture materials 510 in solution 520, and a porous support 571 on which capture materials 510 are disposed. Capture device 500 may also include a solution adjustment mechanism 560 that supplies at least one of an acidic substance, a reducing agent, a sequestering agent, and a builder to solution 520.

(Carbon Dioxide Capture Material)

Capture materials 510 are particulate or powdery. In the present embodiment, capture material 510 is a particle mainly composed of iron or an iron compound. The iron alloy may be a metal containing, for example, a manganese element, a chromium element, a molybdenum element, an aluminum element, a copper element, a zinc element, a nickel element, or any other element, in addition to an iron element. Examples of the iron compound include iron(II) hydroxide and iron(II) hexacyanoferrate(II).

Capture material 510, which is mainly composed of iron or an iron compound, can easily capture carbonate ions or the like in solution 520. In solution 520, iron ions are generated from the iron or the like of capture material 510. The carbonate ions and iron ions that exist in solution 520 precipitate as an iron carbonate, which is recovered as capture product 511.

The average particle size of the plurality of capture materials 510 may be, for example, 5 nm or more and 500 $\mu$m or less, 10 nm or more and 200 $\mu$m or less, or 15 nm or more and 100 $\mu$m or less.

Capture material 510 may be a layered double hydroxide, a basic metal oxide, or a basic metal hydroxide other than iron. The layered double hydroxide may be a compound represented by the following formula (1).

$$[M1_{1-x}^{2+}M2_x^{3+}(OH)_2]^{x+}[A_{x/n}^{n-} \cdot yH_2O]^{x-} \ldots (1)$$

In formula (1) above, M1 is a divalent metal, M2 is a trivalent metal, $A^{n-}$ is an n-valent negative ion, x is a number of 0.2 or more and 0.33 or less, and n is an integer of 1 or more. Examples of M1 include Mg, Mn, Ni, and Zn. Examples of M2 include Al, Cr, Fe, and Co. Examples of $A^{n-}$ include $OH^-$, $Cl^-$, $NO_3^-$, $CO_3^{2-}$, $SO_4^{2-}$, and $[Fe(CN)_6]^{3-}$. The basic metal oxides can be easily carbonated by reacting with carbonate ions in solution 520. The basic metal oxide may be a compound represented by the chemical formula MO (M is a metal). Examples of M include Ca, Mg, and Ba. The basic metal oxide described above can be hydroxylated in solution 520 to form a basic metal hydroxide ($M(OH)_2$), and can further react with carbonate ions ($CO_3^{2-}$) to change into $MCO_3$. A capture material prepared in the form of a basic metal hydroxide may be used as capture material 510. The use of the basic metal hydroxide can easily keep solution 520 basic. This can easily maintain a state in which the ratio of carbonate ions in solution 520 is high.

(Support)

A plurality of capture materials 510 are disposed in support 571. Capture device 500, which includes support 571, can stably hold capture materials 510. In addition, capture product 511, which is an ion carbonate adhering to capture material 510, can be easily recovered and washed.

Support 571 of the present embodiment is a porous sheet. A plurality of capture materials 510 are disposed in a single porous sheet. Support 571, which is a porous sheet, can easily and reliably bring carbonate ions or the like into contact with capture material 510. In addition, the plurality of capture materials 510 are spaced apart from each other in a single porous sheet. Spacing the plurality of capture materials 510 apart from each other suppresses the aggregation of capture materials 510, and thus, the effect of capturing carbonic ions or the like by capture material 510 is improved easily.

Examples of support 571 include cloths, nonwoven fabric sheets, woven fabric sheets, sponge sheets, cellulose fiber sheets such as Japanese paper, carbon fiber sheets, ceramic fiber sheets made of alumina or the like, and metal fiber sheets made of copper, stainless steel, or the like. Capture material 510 may be disposed on a surface of support 571, or may be disposed inside support 571. Support 571 is not limited to the above-described porous sheet and may be, for example, a porous particle or a porous thread.

When capture device 500 has a plurality of supports 571, the plurality of supports 571 may be spaced apart from each other. Such a configuration allows the plurality of capture materials 510 to be easily and stably held so as to easily come into contact with carbonate ions or the like.

When the plurality of supports 571 are spaced apart from each other, these supports 571 may be disposed with a spacer 572 in between. In Figs. 11 and 12, the plurality of supports 571 are disposed alternately with spacers 572 in the thickness direction thereof. Spacer 572 is, for example, plate-shaped. Spacers 572 are disposed alternately with supports 571 with plate surfaces thereof in contact with supports 571. Spacer 572 is a porous body. Spacer 572, which is a porous body, forms a passage through which carbonate ions or the like reach capture materials 510. Examples of spacer 572 include mesh bodies and sponge bodies. Spacer 572 is not limited to being plate-shaped, and may be a rod-shaped member that is in contact with only part of support 571. As spacers 572 are provided, the plurality of supports 571 can be easily disposed at high density while being spaced apart from each other.

(Supply Unit)

Supply unit 530 supplies exhaust gas 12, which is a gas containing carbon dioxide, to solution 520. Supply unit 530 includes a supply pipe that can supply a gas containing carbon dioxide from the bottom of storage tank 501 into storage tank 501.

(Solution)

Solution 520 is constantly covering the plurality of capture materials 510. In capture device 500, the plurality of capture materials 510 are immersed in solution 520.

The pH of solution 520 and the electric potential of capture material 510 may be controlled within the range where divalent iron ions or divalent iron hydroxide is stable in the electric potential-pH diagram. In other words, the pH of solution 520 and the electric potential of capture material 510 may be controlled to increase the content of divalent iron ions or divalent iron hydroxide in solution 520.

Solution 520 contains water as a solvent. Solution 520 may also include a dissolution promoter that promotes the dissolution of carbon dioxide in solution 520, or may include a pH buffering agent. Solution 520 may include a salt that exhibits acidity in solution 520 to reduce the pH of solution 520. Solution 520 may also contain a carbonation promoter 521 for promoting the carbonation of the iron ions eluted from capture materials 510. An example of the dissolution promoter is carbonic anhydrase. The carbonic anhydrase promotes the generation of hydrogen carbonate ions ($HCO_3^-$). The above-described pH buffering agent (buffer) makes it easier to keep the pH of solution 520 at a desired value. Examples of the pH buffering agent include sodium tartrate, sodium acetate, sodium borate, sodium citrate, ammonium chloride, and sodium phosphate. Examples of the salt that exhibits acidity in solution 520, that is, the salt that is dissolved in solution 520 and exhibits acidity, include sodium hydrogen sulfate, ammonium hydrogen sulfate, sodium dihydrogen phosphate, iron(II) sulfate, and iron(II) chloride. As solution 520 contains the salt described above, the pH of solution 520 can be easily reduced. In the present embodiment, carbonation promoter 521 is particulate. Carbonation promoter 521 is mainly composed of iron carbonate or iron hydrogen carbonate. Carbonation promoter 521 can serve as a seed crystal for carbonation of iron ions.

A gas containing carbon dioxide is supplied from supply unit 530 to solution 520. As a result, carbonate ions ($CO_3^{2-}$) or hydrogen carbonate ions ($HCO_3^-$) are generated in solution 520.

(Dissolution Promotion Mechanism)

Dissolution promotion mechanism 540 promotes the dissolution of carbon dioxide into solution 520 as described above. Capture device 500, which includes dissolution promotion mechanism 540, can easily increase the amount of carbon dioxide in solution 520. This results in more improved efficiency of capturing carbon dioxide.

Examples of dissolution promotion mechanism 540 include a bubble generator that can generate fine bubbles such as nano-bubbles or microbubbles in solution 520, an ultrasonic generator that can generate cavitation bubbles in solution 520, and a temperature-pressure controller that can lower the temperature of solution 520 and increase the partial pressure of carbon dioxide.

In Figs. 11 and 12, capture device 500 includes the above-described bubble generator as dissolution promotion mechanism 540. The above-described bubble generator is disposed in a flow channel for a gas containing carbon dioxide from supply unit 530 to storage tank 501. The above-described bubble generator generates fine bubbles of a gas containing carbon dioxide and supplies the generated fine bubbles to solution 520.

(Dispersion Mechanism)

Dispersion mechanism 550 disperses the plurality of capture materials 510 in solution 520. Dispersion mechanism 550 maintains the average particle size of the plurality of capture materials 510. Dispersion mechanism 550 functions particularly effectively when the plurality of capture materials 510 are prone to aggregate. Dispersion mechanism 550 can be a device that generates a water flow in solution 520, and may be an ultrasonic generator, a stirring device, or the like. Fig. 11 shows the ultrasonic generator as dispersion mechanism 550. In addition, a device that magnetically attracts, fractionates, and fixes (fixes at a specific position) capture material 510 can also be used as dispersion mechanism 550. An example of such a device is a magnetic separator.

(Solution Adjustment Mechanism)

Solution adjustment mechanism 560 supplies an acidic substance to solution 520 when, for example, the pH of solution 520 has increased. Examples of the acidic substance include the salt described above and a solution with the salt dissolved therein.

(Storage Tank)

Capture device 500 includes storage tank 501 in which solution 520 is stored. Capture device 500 also includes a degassing promotion mechanism 503 that discharges a gas released from solution 520. In the present embodiment, storage tank 501 has a porous membrane 502 for spacing carbonation promoter 521 apart from capture material 510 and support 571.

(Porous Membrane)

As shown in Fig. 11, for example, porous membrane 502 vertically separates carbonation promoter 521 from capture material 510 and support 571 in storage tank 501. Carbonation promoter 521 may be disposed below porous membrane 502, and capture material 510 and support 571 may be disposed above porous membrane 502. As porous membrane 502 separates carbonation promoter 521 from capture material 510 and support 571, as described above, iron carbonate or the like formed on carbonation promoter 521 as a seed crystal can be recovered easily.

Porous membrane 502 may be configured to inhibit iron carbonate or the like from passing therethrough and allow carbonate ions or the like to pass therethrough. As porous membrane 502 inhibits iron carbonate or the like from passing therethrough, the iron carbonate or the like formed on carbonation promoter 521 as a seed crystal can be inhibited from coating capture material 510, thereby further inhibiting capture material 510 from losing its activity. In addition, as porous membrane 502 allows carbonate ions or the like to pass therethrough, the supply of carbonate ions or the like to capture material 510 can be promoted easily.

(Degassing Promotion Mechanism)

Degassing promotion mechanism 503 is disposed at the top of storage tank 501. Degassing promotion mechanism 503 discharges the gas, which has risen in solution 520 and has been released from the liquid surface of solution 520, out of capture device 500. Further, degassing promotion mechanism 503 discharges the above-described gas out of capture device 500 so as to reduce the pressure of the gas in contact with solution 520. As the pressure of the gas in contact with solution 520 is reduced in this manner, degassing promotion mechanism 503 reduces the amount of dissolved oxygen contained in solution 520. This reduces the oxidation action of the oxygen dissolved in solution 520, thus allowing a state with an increased ratio of divalent iron ions in solution 520 to be maintained easily.

It should be understood that the embodiment disclosed herein is illustrative and non-restrictive in every respect. The scope of the present invention is not limited to these examples but is defined by the terms of the claims, and is intended to include any modifications within the scope and meaning equivalent to the terms of the claims.

REFERENCE SIGNS LIST

1 carbon dioxide recovery system;
10 mobile body; 11 vehicle-mounted controller; 12 exhaust gas; 13 exhaust valve; 14 tank; 15 storage device; 16 fuel tank; 17 internal combustion engine;
18 drive system; 19 vehicle-mounted device;
20 recovery station; 21 recovery controller; 22 gas reception unit; 23 connection pipe; 24 communication cable;
30 recovery management business entity; 31 management server;
40 owner; 41 owner terminal;
50 carbon dioxide emission supervisor; 51 supervisor device;
60 service provider; 61 service provider device;
70 network;
81 carbon dioxide credit; 82 service; 83 incentive;
101, 201, 301 computing unit;
102, 202 control unit;
103, 203, 303 communication unit;
104, 204, 304 storage unit;
105, 205 input/output unit;
206, 306 display unit;
107, 207, 307 bus;
500 capture device; 501 storage tank; 502 porous membrane; 503 degassing promotion mechanism; 510 capture material (carbon dioxide capture material); 511 capture product; 520 solution; 521 carbonization promoter; 530 supply unit; 540 dissolution promotion mechanism (bubble generator); 550 dispersion mechanism (ultrasonic generator); 560 solution adjustment mechanism; 571 support; 572 spacer

**Claims**

1.  A carbon dioxide recovery system comprising a mobile body in which an internal combustion engine is mounted, and a recovery station that recovers an exhaust gas discharged from the internal combustion engine and captures carbon dioxide, wherein

    the mobile body includes:

a tank that stores the exhaust gas; and
a vehicle-mounted controller that controls storage and delivery of the exhaust gas, and

the recovery station includes:

a capture device that receives the exhaust gas delivered from the mobile body and captures carbon dioxide from the received exhaust gas; and
a recovery controller that controls an operation of the capture device.

2. The carbon dioxide recovery system according to claim 1, wherein

the mobile body includes an exhaust valve that delivers the exhaust gas stored in the tank to the recovery station,
the recovery station includes a gas reception unit that receives, through a connection pipe, the exhaust gas delivered from the exhaust valve, and
the recovery controller:

receives mobile body information from the vehicle-mounted controller; and
receives capture information from the capture device.

3. The carbon dioxide recovery system according to claim 2, wherein

the recovery controller transmits the mobile body information and the capture information in association with each other to a management server, and
the management server:

outputs an amount of recovered carbon dioxide based on the capture information;
accepts an input of a carbon dioxide credit corresponding to the amount of recovered carbon dioxide; and
calculates an incentive provided to an owner of the mobile body based on the carbon dioxide credit, the mobile body information, and the capture information.

4. The carbon dioxide recovery system according to claim 3, wherein the management server:

transmits the mobile body information to a service provider device; and
transmits information on the incentive to an owner terminal.

5. The carbon dioxide recovery system according to any one of claims 2 to 4, wherein the mobile body information includes at least one piece of information of individual identification information on the mobile body, owner information of the mobile body, a travel distance of the mobile body, a travel time of the mobile body, a current location of the mobile body, a travel history of the mobile body, a remaining fuel amount of the mobile body, and power storage information of the mobile body.

6. The carbon dioxide recovery system according to any one of claims 2 to 5, wherein the capture information includes at least one piece of information of an amount of the exhaust gas processed by the capture device, an operating time of the capture device, and an amount of a capture product recovered from the capture device.

7. The carbon dioxide recovery system according to any one of claims 1 to 6, wherein

the capture device includes a carbon dioxide capture material, a solution in which the carbon dioxide capture material is immersed, a supply unit that supplies the exhaust gas to the solution, and a storage tank in which the solution is stored, and
the carbon dioxide capture material is a layered double hydroxide, a basic metal oxide, a basic metal hydroxide, iron, or an iron compound.

8. The carbon dioxide recovery system according to any one of claims 1 to 7, wherein a storage pressure of the exhaust gas in the tank is less than 1.0 MPa.

9. The carbon dioxide recovery system according to any one of claims 1 to 8, wherein a volume of the tank is 200 liters or less.

10. A vehicle-mounted controller for the carbon dioxide recovery system according to any one of claims 2 to 6, wherein the vehicle-mounted controller is configured to:

detect connection of the connection pipe to the exhaust valve;
control discharge of the exhaust gas from the tank; and
transmit the mobile body information to the recovery controller.

11. A recovery controller for the carbon dioxide recovery system according to any one of claims 2 to 6, wherein the recovery controller is configured to:

detect connection of the connection pipe to the gas reception unit;
control a capture process of the capture device;

receive the mobile body information from the vehicle-mounted controller;
receive the capture information from the capture device; and
output information including all or part of the mobile body information and the capture information to outside.

EP 4 660 427 A1

FIG.1

FIG.2

FIG.3

FIG.4

VEHICLE-MOUNTED
CONTROLLER

11

COMPUTING
UNIT

101

VEHICLE-MOUNTED
DEVICE 19
(VEHICLE-MOUNTED
SENSOR)

COMMUNICATION
UNIT

103

INPUT/
OUTPUT UNIT

105

CONTROL
UNIT

102

STORAGE 15
DEVICE

STORAGE
UNIT

104

107

RECOVERY
CONTROLLER 21

FIG.5

21

RECOVERY CONTROLLER

COMPUTING UNIT

201

CONTROL UNIT

GAS RECEPTION UNIT 22

CAPTURE DEVICE 500

VEHICLE-MOUNTED CONTROLLER    11

INPUT/ OUTPUT UNIT

204    202

205

STORAGE UNIT

DISPLAY UNIT

206

COMMUNICATION UNIT

207

203

MANAGEMENT SERVER  31

FIG.6

31

MANAGEMENT SERVER

COMPUTING UNIT

301

NETWORK 70

COMMUNICATION UNIT

303

STORAGE UNIT

304

307

DISPLAY UNIT

306

EP 4 660 427 A1

FIG.7

START

S101 — CONNECTION PIPE CONNECTED? — N

Y

S102 — INSTRUCT STORAGE DEVICE TO RELEASE

S103 — TRANSMIT MOBILE BODY INFORMATION

S104 — RELEASE ENDED? — N

Y

S105 — INSTRUCT STORAGE DEVICE TO STOP RELEASE

END

# FIG.8

```
                    ┌─────────┐
                    │  START  │
                    └─────────┘
                         │
                         ▼
S201      ◇ CONNECTION PIPE CONNECTED? ◇──N──┐
                         │Y                   │
                         │                    │
    ┌────────────────────┴──────────────────┐│
    ▼                                        ▼│
S202  INSTRUCT GAS RECEPTION        S203  RECEIVE MOBILE BODY
      UNIT TO RECEIVE DISCHARGE           INFORMATION FROM
      GAS                                  MOBILE BODY
        │                                        │
        ▼                                        │
S204  INSTRUCT CAPTURE DEVICE                    │
      TO START PROCESS                           │
        │                                        │
        ▼                                        │
S205  ◇ PROCESS OF CAPTURE DEVICE COMPLETE? ◇──N─┘
        │Y
        ▼
S206  INSTRUCT CAPTURE DEVICE
      TO STOP PROCESS
        │
        ▼
S207  OBTAIN PROCESSING RESULT
      DATA FROM CAPTURE DEVICE
        │
        ▼
S208  TRANSMIT INFORMATION TO
      MANAGEMENT SERVER
        │
        ▼
    ┌─────────┐
    │   END   │
    └─────────┘
```

23

## FIG.9

```
        ┌─────────┐
        │  START  │
        └─────────┘
             │
             ▼
┌──────────────────────────────┐
│ RECEIVE MOBILE BODY          │
│ INFORMATION AND              │
S301 │ COMPLEMENTARY INFORMATION    │
│ FROM RECOVERY STATION        │
└──────────────────────────────┘
             │
             ▼
┌──────────────────────────────┐
S302 │ CALCULATE AMOUNT OF          │
│ RECOVERED CARBON DIOXIDE     │
└──────────────────────────────┘
             │
             ▼
┌──────────────────────────────┐
S303 │ CREATE RECOVERY DATA PER     │
│ MOBILE BODY                  │
└──────────────────────────────┘
```

S301 — RECEIVE MOBILE BODY INFORMATION AND COMPLEMENTARY INFORMATION FROM RECOVERY STATION

S302 — CALCULATE AMOUNT OF RECOVERED CARBON DIOXIDE

S303 — CREATE RECOVERY DATA PER MOBILE BODY

S304 — TRANSMIT RECOVERY AMOUNT DATA TO CARBON DIOXIDE EMISSION SUPERVISOR

S306 — TRANSMIT INFORMATION TO SERVICE PROVIDER

S305 — RECEIVE CARBON DIOXIDE CREDIT FROM CARBON DIOXIDE EMISSION SUPERVISOR

S307 — CALCULATE INCENTIVE PER MOBILE BODY

S308 — TRANSMIT INFORMATION TO OWNER

END

FIG.10

| MOBILE BODY No. | OWNER ID | DATE AND TIME OF RECOVERY | RECOVERY STATION ID | AMOUNT OF RECOVERED CARBON DIOXIDE | CARBON DIOXIDE CREDIT | INCENTIVE |
|---|---|---|---|---|---|---|
| A1001 | | | | | | |
| A1002 | | | | | | |
| . . . | | | | | | |
| E2031 | | | | | | |

FIG.11

FIG.12

## INTERNATIONAL SEARCH REPORT

| International application No. |
|---|
| **PCT/JP2023/043827** |

| A. | CLASSIFICATION OF SUBJECT MATTER |
|---|---|

*F01N 3/08*(2006.01)i; *G06Q 10/083*(2024.01)i; *G06Q 50/40*(2024.01)i
FI:   F01N3/08 A; G06Q50/40; G06Q10/083

According to International Patent Classification (IPC) or to both national classification and IPC

| B. | FIELDS SEARCHED |
|---|---|

Minimum documentation searched (classification system followed by classification symbols)

F01N3/08; G06Q10/083; G06Q50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-77028 A (TOYOTA JIDOSHA KABUSHIKI KAISHA) 20 May 2021 (2021-05-20) paragraphs [0028]-[0048], [0069]-[0073], fig. 1 | 1 |
| Y | | 2-11 |
| Y | JP 2021-33736 A (TOYOTA JIDOSHA KABUSHIKI KAISHA) 01 March 2021 (2021-03-01) claim 1, paragraphs [0041]-[0043] | 2-11 |
| Y | JP 2021-32136 A (TOYOTA JIDOSHA KABUSHIKI KAISHA) 01 March 2021 (2021-03-01) claims 11, 12 | 2-11 |
| Y | JP 2007-75773 A (NATIONAL INSTITUTE FOR MATERIALS SCIENCE) 29 March 2007 (2007-03-29) paragraphs [0028]-[0030], fig. 1 | 7 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2023/043827**

| Patent document cited in search report | | | Publication date (day/month/year) | Patent family member(s) | | | Publication date (day/month/year) |
|---|---|---|---|---|---|---|---|
| JP | 2021-77028 | A | 20 May 2021 | US fig. 1, paragraphs [0022]-[0045], [0068]-[0073] CN | 2021/0138399 112780384 | A1 A | |
| JP | 2021-33736 | A | 01 March 2021 | DE | 102020210098 | A1 | |
| JP | 2021-32136 | A | 01 March 2021 | US claims 11, 12 EP CN | 2021/0053011 3783205 112412580 | A1 A1 A | |
| JP | 2007-75773 | A | 29 March 2007 | (Family: none) | | | |

Form PCT/ISA/210 (patent family annex) (July 2022)

**EP 4 660 427 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023012113 A
- JP 2021105362 A
- JP 2021033736 A
- JP 2007075773 A